# EUROPÄISCHE PATENTANMELDUNG

(11) **EP 0 630 144 A2**
(43) Veröffentlichungstag der Anmeldung: **21.12.1994**
(21) Anmeldenummer: 94108945.0
(22) Anmeldetag: 10.06.1994
(51) Int. Cl.: H04N 1/00

(54) **Telediensteinrichtung eines Kommunikationsnetzes**

(30) Priorität: 18.06.1993 DE 4320251
(71) Anmelder: SIEMENS AKTIENGESELLSCHAFT, D-80333 München (DE)
(72) Erfinder: Anton, Erich, Dipl.-Ing., D-85579 Neubiberg (DE)

(57) **Zusammenfassung**

Der Erfindung liegt die Aufgabe zugrunde, den Zugang zu Telediensten zu erweitern.
Diese Aufgabe wird durch eine erfindungsgemäße Telediensteinrichtung gelöst, die die zu Telediensten gehörigen Teleinformationen im FAX-Format anbietet. Damit können nunmehr auch FAX-Geräte zur Erschließung von Telediensten dienen.

## Beschreibung

Die Erfindung betrifft eine Telediensteinrichtung eines Kommunkationsnetzes nach dem Oberbegriff des Anspruchs 1 sowie ein Verfahren zum Abrufen von Telediensten nach dem Oberbegriff des Anspruchs 2.

Teledienste über öffentliche Kommunikationsnetze finden zunehmendes Interesse.

Der Erfindung liegt die Aufgabe zugrunde, den Zugang zu Telediensten zu erweitern.

Diese Aufgabe wird durch die Merkmale des Anspruchs 1 gelöst.

Die Idee der Erfindung besteht darin, Teledienste (z.B. Ansagedienste, BTX-Dienste, usw.) durch eine entsprechende Telediensteinrichtung den Benutzern eines Kommunikationsnetzes im FAX-Format bereitzustellen. Dadurch wird die Abrufbarkeit von Telediensten um ein neuartiges Format bereichert. Damit können auch FAX-Geräte zur Erschließung von Telediensten dienen.

Eine weitere Ausgestaltung der Erfindung ist durch Anspruch 4 angegeben. Bei dieser Ausführungsform der Erfindung kann auch ein Personalcomputer zum Empfang der in FAX-Format angebotenen Teledienste benutzt werden.

Im folgenden wird die Erfindung näher erläutert.

Nachdem die Auswahl der von der Telediensteinrichtung an das FAX-Gerät zu sendenden Teleinformationen durch Wählen einer bestimmten Dienstnummer getroffen ist, gibt es mehrere Realisierungsmöglichkeiten des erfindungsgemäßen FAX-Abrufdienstes.

Beispielsweise kann nach der Auswahl der zu sendenden Teleinformationen die Verbindung ausgelöst und von der Telediensteinrichtung zu dem FAX-Gerät des anfordernden Teilnehmers aufgebaut werden. Dessen Rufnummer ist entweder in der Auswahl-Phase der gewünschten Teleinformationen (auf Aufforderung oder als Bestandteil einer Vereinbarung (Protokoll) der zu wählenden Ziffern) gewählt worden oder, wenn das Netz und die Teilnehmeranschlüsse darauf eingerichtet sind (z.B. calling number delivery, calling number identification), vor oder in der Rufphase übertragen worden. Damit steht auch der gegebenenfalls zu belastende Rechnungsempfänger fest.

Eine weitere Realisierungsmöglichkeit des erfindungsgemäßen FAX-Abrufdienstes besteht darin, in der "premessage phase" zu vereinbaren, daß die gerufene Seite sendet und die rufende Seite empfängt. Diese Vereinbarung kann z.B. über die NSF-Fähigkeiten (non standard facilities capabilities) realisiert werden. Die gegebenenfalls an fallenden Gebühren können der in der "premessage phase" zu sendenden Nachricht TSI (Transmitting Subcriber Identification) zu entnehmenden FAX-Nummer belastet werden. Diese Realisierungsmöglichkeit setzt voraus, daß sowohl die Telediensteinrichtung als auch die FAX-Einrichtung des Teilnehmers für diese Betriebsweise ausgelegt sind und der Anruf in dieser Betriebsweise erfolgt.

Zur Ansteuerung der erfindungsgemäßen Telediensteinrichtung kann eine spezielle Dienstnummer dienen. Die Auswahlmenues (z.B. am Bildschirm) können durch Ansagen ersetzt werden.

Die Verrechnung der Dienstleistungen durch den neuen FAX-Abrufdienst kann analog zu vorhandenen Prinzipien, wie z.B. beim BTX-Dienst, realisiert werden.

Ein eigener FAX-Dienst (d.h. eigene Dienstnummer) für die Übertragung der Angebotspalette, ggf. mit Auswahl der einzelnen Produktspektren, kann anbieterindividuell (eigene Rufnummer, ggf. mit Nachwahl) ähnlich einem Ansagedienst über das Fernsprechnetz (d.h. auch für mobile Dienste) zur Verfügung gestellt werden.

Darüber hinaus können bisherige Ansagedienste (z.B. Kochrezepte, Wettervorhersagen, Börsendienst, Totoergebnisse, Lottoergebnisse, usw.) mittels einer eigenen (zu wählenden) Dienstnummer ebenfalls als eigener FAX-Dienst zur Verfügung gestellt werden.

Das angebotene FAX-Format kann anstelle des Ausdruckens durch das FAX-Gerät auch auf dem Speichermedium eines Personalcomputers abgespeichert werden, sofern dieser mit einer entsprechenden Zusatzeinrichtung (FAX-Karte) ausgerüstet ist.

Den Anbietern von Teleinformationen über die erfindungsgemäße Telediensteinrichtung sollten Daten über die Nutzung ihres Informationsangebots kurzfristig nach Anforderung, ggf. mit statistischer Aufbereitung nach von ihnen festgelegten Kriterien zur Verfügung gestellt werden.

Durch die erfindungsgemäße Telediensteinrichtung können Benutzer eines FAX-Gerätes bzw. eines Personalcomputers mit entsprechender Ausrüstung somit nunmehr Zugang zu Datenbank und Informationsdiensten und sonstigen Dienstleistungen für Bild- oder Textausgabe im FAX-Format erhalten.

## Patentansprüche

1. Telediensteinrichtung eines Kommunikationsnetzes, die den Benutzern des Kommunikationsnetzes Teledienste bereitstellt, wobei die genannten Teledienste über entsprechende Dienstnummern durch den Benutzer abrufbar sind,
**dadurch gekennzeichnet**,
daß die Telediensteinrichtung die Teledienste im FAX-Format bereitstellt.

2. Verfahren zum Abrufen von Telediensten eines Kommunikationsnetzes, demgemäß
Teledienste durch den Benutzer von einer entsprechenden Telediensteinrichtung des Kommunikationsnetzes abgerufen werden,
**dadurch gekennzeichnet**,
daß Teledienste von der Telediensteinrichtung auf Grund der Wahl einer entsprechenden Dienstnummer im FAX-Format bereitgestellt werden.

3. Verfahren nach Anspruch 2,
**dadurch gekennzeichnet**,
daß die im FAX-Format angebotenen Teledienste von einem FAX-Gerät empfangen werden.

4. Verfahren nach Anspruch 2,
**dadurch gekennzeichnet**,
daß die im FAX-Format angebotenen Teledienste von einem Personalcomputer empfangen werden.
